# EUROPEAN PATENT SPECIFICATION

(11) **EP 4 080 688 B1**
(45) Date of publication and mention of the grant of the patent: **01.01.2025**
(21) Application number: 21169548.1
(22) Date of filing: 21.04.2021
(51) Int. Cl.: H01R 13/52, H01R 25/14, F21V 21/35, F21V 31/00, H02G 3/04

(54) **CONDUCTOR RAIL SYSTEM WITH A COVER**
STROMSCHIENENSYSTEM MIT ABDECKUNG
SYSTÈME DE RAIL CONDUCTEUR COMPORTANT UN COUVERCLE

(43) Date of publication of application: 26.10.2022
(73) Proprietor: Zumtobel Lighting GmbH, 6850 Dornbirn (AT)
(72) Inventor: Desta, Tamrat, 6850 Dornbirn (AT); Krampl, Yannick, 6850 Dornbirn (AT)
(74) Representative: Thun, Clemens

(56) References cited:
- EP-A1- 2 897 236
- EP-B1- 1 284 033
- CN-A- 109 638 526
- US-A1- 2019 249 854
- US-B1- 7 744 386

## Description

The invention relates to a conductor rail system for connecting an electrical device, especially a luminaire, whereby the conductor rail system has a cover.

Currently known conductor rail systems comprise at least one mounting rail, whereby the system offers the flexibility of connecting electrical devices to the at least one mounting rail. Those electrical devices, which are mainly luminaires, can then be flexibly arranged along the mounting rail. However, current conductor rail systems usually do not have a cover on their open side, allowing dust, moisture and humidity to enter, and when a cover is provided, it is rigidly adapted to the selected position of the electrical device, for example, by cutting an appropriate cover. Therefore, the rigidly fitted cover prevents the electrical device from being flexibly positioned along the conductor rail system.

The CN 109638526 A describes a socket strip with plug contacts movable along an axis, wherein a rubber folding sheet is arranged between the edge of the socket strip and between each of the plug contacts. The rubber folding sheet prevents engagement with the interior of the socket strip and thus prevents a user from coming into contact with power-carrying busbars.

The invention is concerned with the task of providing a conductor rail system with a movable cover for a more flexible positioning of the electrical device connected to the conductor rail system.

This task is solved by a conductor rail system according to independent claim 1. Particular embodiments of the invention are disclosed in the dependent claims.

According to the invention a conductor rail system for connecting an electrical device, especially a luminaire, is provided, whereby the conductor rail system comprises at least one longitudinal mounting rail with a longitudinal axis, with two side walls and a bottom wall, whereby preferably the mounting rail has a U-shape in a cross-section perpendicular to the longitudinal axis. Moreover, the conductor rail system comprises an electroconductor profile held by said mounting rail, whereby the electroconductor profile comprises wires for an electric power supply and/or for transmission of control and/or data signals, and whereby the electroconductor profile is preferably arranged on the inside of the mounting rail. Furthermore, the conductor rail system includes a gear tray, whereby the gear tray is moveable along the longitudinal direction of the electroconductor profile and thus the mounting rail, and a connecting element connecting the gear tray and the electrical device. Adding to that, according to the invention, the conductor rail system has an elongated and flexible cover which is held between the two side walls of the mounting rail, whereby the cover is mounted movably along the longitudinal direction of the mounting rail, and whereby the cover is connected with the connecting element and is further configured to move along with a movement of the electrical device, and whereby the cover covers at least a determined part of the mounting rail in any position of the gear tray and thus of the electrical device.

The so provided conductor rail system allows a flexible relocation of an electrical device connected thereto, furthermore the cover follows the relocation of the electrical device and thus provides optimized protection to the conductor rail system and in particular to the components arranged inside the conductor rail system respectively the mounting rail.

According to a preferred embodiment, the cover has a hole for receiving the connecting element forming the connection between the cover and the connecting element. With such an embodiment, the components cover and connecting element are coupled to each other toolless, so that a movement of the connecting element along the longitudinal direction, for example by moving the electrical device, leads directly to a movement of the so coupled cover.

Furthermore, preferably the electroconductor profile is provided with grooves which can be accessed from a contact side and which run in a longitudinal manner along the mounting rail, said grooves having the wires for an electric power supply and/or for transmission of control and/or data signals. With this configuration, the mounting rail and its electroconductor profile is optimized concerning safety and aesthetics, as the grooves prohibit direct contact for a person grabbing inside the conductor rail system, and further prevents a direct view of the wire.

According to a further embodiment, the gear tray is formed to couple electrically and preferably mechanically with the electroconductor profile of the mounting rail by electrical taps. With this form of coupling of the gear tray and the electroconductor profile, a stable but movable contacting is provided, so that there is constant contact with the corresponding wires in different positions of the gear tray along the electroconductor profile and thus the mounting rail.

Preferably the cover comprises a flat cover surface and lateral sealing lips, wherein in a cross-section perpendicular to the longitudinal direction of the mounting rail the sealing lips protrude from the plane of the cover surface, and in particular are perpendicular to the cover surface in an approximation, whereby the sealing lips engage in a sealing manner in corresponding notches of the side walls, and whereby preferably the cover surface contacts the side walls, and whereby preferably the cover is of a bendable and/or translucent material. With this implementation it is ensured, that the cover seals the mounting rail and protects the inside of the mounting rail especially preferred against dust, humidity and moisture. Moreover with the flat cover surface the conductor rail system respectively the mounting rail is aesthetically closed, whereby it is further ensured by the side walls and their notches that the cover is positioned correctly, such that the cover easily is moveable along the mounting rail while continuously providing that the sealing is maintained.

According to the invention, the cover has end pieces at its ends, whereby these end pieces are connected by an end piece connection element, such that the cover, the end pieces and the end piece connection element form a loop, and whereby preferably the end piece connection element is formed by a wire or string and a hook or other means of connection. This embodiment facilitates moving the cover, since the ends of the cover are now connected to each other and thus a pushing and pulling movement is simultaneously exerted on the two ends of the cover by moving the electrical device and thus also the gear tray and the cover connected to it. Moreover, in this loop-like embodiment of the cover, it is provided that the cover continuously covers at least a determined part of the mounting rail in a sealing manner.

According to the invention, the mounting rail comprises a guide element in each of its two end face areas, whereby the guide element supports the movement of the cover, and whereby the cover is at least partially bent around the guide element, whereby preferably the guide element is formed by a wheel element or a cam element. With this embodiment the movement of the cover is further facilitated, which also eases the positioning of the gear tray and the connected electrical device. Moreover, the guide element supports the covering of at least a determined part of the mounting rail, as it holds the cover in place, while additionally assisting in the loop-movement of the cover.

In another embodiment the guide element gives haptic feedback to a user, such as that a change in acceleration of the movement of the cover results in a changed resistance of motion, preventing unwanted movements of the cover and thus of the electrical device. For example a change of acceleration could be from standstill to movement or movement to standstill, whereby in those states of changed acceleration the resistance of motion could be increased, ensuring that the executed movement is intended, whereby preferably a constant movement without a change in acceleration is not influenced, ensuring an easy and precise repositioning of the cover and thus the electrical device.

According to another embodiment the mounting rail comprises end caps, which are arranged at the two end faces of the mounting rail, and wherein the end caps preferably comprise at least one sealing element which is arranged to abut against the cover sealing the mounting rail at the end faces towards the cover. These end caps provide additional safety and aesthetics to the conductor rail system. In an preferred embodiment where the elongated and flexible cover covers one whole side of the mounting rail, all sides of the mounting rail are covered with the additional end caps. Moreover, the at least one sealing element provides additional sealing, whereby by contacting the cover at the end portions and end face areas of the mounting rail, the inside of the mounting rail and thus the inside of the conductor rail system is preferably protected against unintentional contact, moisture, humidity and dust.

Preferably parts of the cover which are not used to cover the mounting rail are arranged inside of the mounting rail and are thus covered by the parts of the cover that are used for covering the mounting rail. Thus, the conductor rail system is formed particularly simple, aesthetic and functional.

In a further embodiment the cover provides a dust, humidity and/or moisture protection of the inside of the mounting rail, especially according to an IP protection class, in particular according to IP 54 or higher. This enables the functionality of the conductor rail system in various situations, whereby the conductor rail system can be used flexibly, especially in outdoor and indoor areas, as well as in wet rooms or similar.

According to another embodiment the conductor rail system is characterized in that the gear tray has a casing, which consists of three casing elements, and one handle which is placed inside of the three casing elements, wherein the handle is connected to the connecting element, preferably connected by means of a snap-in and twist-proof snap-in mounting. With this configuration, the setup of the conductor rail system is simplified, coupling the gear tray and the connecting element.

Preferably the handle comprises the electrical taps, wherein in an assembly state the electrical taps are disposed inside the casing of the gear tray, and wherein the handle is configured such that the electrical taps extend out of the housing to an operating state upon rotation of the connecting element, wherein in the operating state the electrical taps are electrically contacted and mechanically coupled with the electroconductor profile. The gear tray formed in this way with the handle makes it particularly easy and flexible to connect to the mounting rail both electrically and mechanically, so that the gear tray together with the electrical device connected via the connecting element is coupled to the system. Furthermore, the cover connected to the gear tray ensures that the gear tray and the electrical taps as well as the contact area with the electroconductor profile are protected.

Further preferably the electrical device is movable rotationally around the connecting element, and moveable in a longitudinal direction along the mounting rail by the mechanical connection of the electrical device, the connecting element and the gear tray. Therefore, the electrical device is flexible in its positioning and orientation. For rotating the electrical device a rotation of the connecting element is preferably not required or intended, such that the electrical and mechanical connection to the electroconductor profile is maintained.

In a further preferred embodiment the conductor rail system has a second luminaire, whereby the cover functions as a light emitting surface of the second luminaire, whereby preferably the second luminaire comprises light sources, such as LEDs, which are arranged at the gear tray or at end caps of the mounting rail. With this embodiment the electrical device has some sort of background lighting, improving the usability and aesthetics of the conductor rail system. With the cover being a light emitting surface on itself, the whole length of the mounting rail is effectively used. Further preferably, the cover has light influencing elements to improve the light output via the cover and to adapt it to individual situations.

Furthermore in another embodiment the gear tray comprises a power supply unit for the electrical device, as well as other components such as preferably communication devices for control commands or data, whereby the gear tray is electronically connected to the electrical device. A such designed gear tray would be particularly flexible in use, whereby furthermore a wide variety of electrical devices can be coupled with such a gear tray. For example, the electrical device could be a luminaire, a spotlight, another light source, one or more audio speakers, sensors, a camera, or other electrical devices. This allows the conductor rail system to be particularly compact in design, as these components are located inside the mounting rail of the conductor rail system.

According to a further embodiment, the conductor rail system comprises multiple gear trays and thereto connected connecting elements for connection with an electrical device, whereby the gear trays are arranged in series along the longitudinal axis of the mounting rail, and whereby each of the gear trays and connecting elements is connected to the cover of the conductor rail system. Therefore, multiple and different electrical devices can be linked to one conductor rail system via the respective connecting elements and gear trays, whereby these electrical devices can be moved together along the longitudinal axis of the mounting rail.

Moreover it can be preferably provided, that the conductor rail system consists of multiple mounting rails, whereby in the areas of connection of two mounting rails the two respective covers and the mounting rail are sealed by at least one sealing element. With the multiple mounting rails in one conductor rail system, multiple electrical devices could be connected to the conductor rail system via individual connecting elements, whereby the different electrical devices could be moved individually, as long as the concerned electrical devices are coupled to different covers of the conductor rail system.

The invention is explained in detail below with reference to examples of embodiments and with reference to the drawing. The figures show:
- Figure 1: Angled view of an embodiment of a conductor rail system with a longitudinal mounting rail and a mounted spotlight as an electrical device, with the cover covering the mounting rail and end caps closing at the end faces of the mounting rail;
- Figure 2A: Angled view of an embodiment of a gear tray;
- Figure 2B: Exploded view of the embodiment of a gear tray known from Figure 2A;
- Figure 3: Exploded view of the embodiment of a conductor rail system known from Figure 1;
- Figure 4: Cross-sectional view along the longitudinal axis of an embodiment of a conductor rail system with its internal components;
- Figure 5: Cross-sectional view of an embodiment of a conductor rail system along the sectional axis A-A shown in Figure 4, which is perpendicular to the longitudinal axis of the conductor rail system;
- Figure 6: Enlarged illustration of an end region of an embodiment of a conductor rail system with its components.

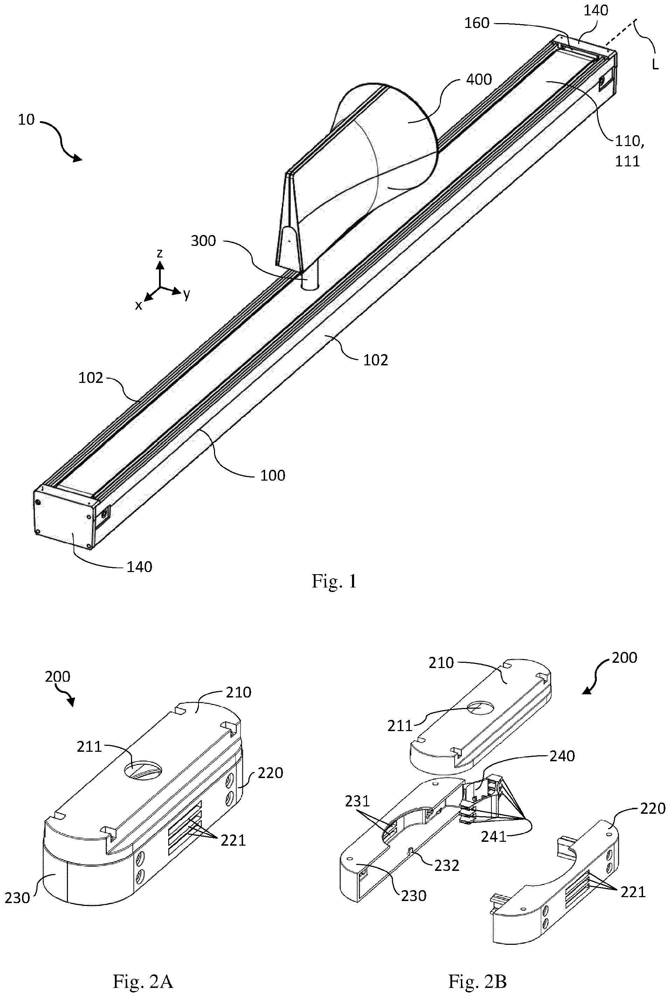

Figure 1 shows an angled view of an embodiment of a conductor rail system 10 according to the invention and an electrical device 400 connected with the conductor rail system 10, whereby in the displayed embodiment of the conductor rail system 10 the electrical device 400 is a luminaire 400. Herby the conductor rail system 10 comprises a longitudinal mounting rail 100 with a longitudinal axis L, respectively with a longitudinal direction L, whereby the mounting rail 100 is at least approximately U-shaped in a cross-sectional view perpendicular to the longitudinal axis L. As indicated in Figure 1 the longitudinal direction L of the mounting rail 100 is along the x-axis.

The mounting rail 100 comprises a bottom wall 101 and two side walls 102 protruding from the plane of the bottom wall 101. Moreover the mounting rail 100 is covered by an elongated and flexible cover 110, which is held between the two side walls 102 of the mounting rail 100. The cover 110 is mounted movably along the longitudinal direction L of the mounting rail 100.

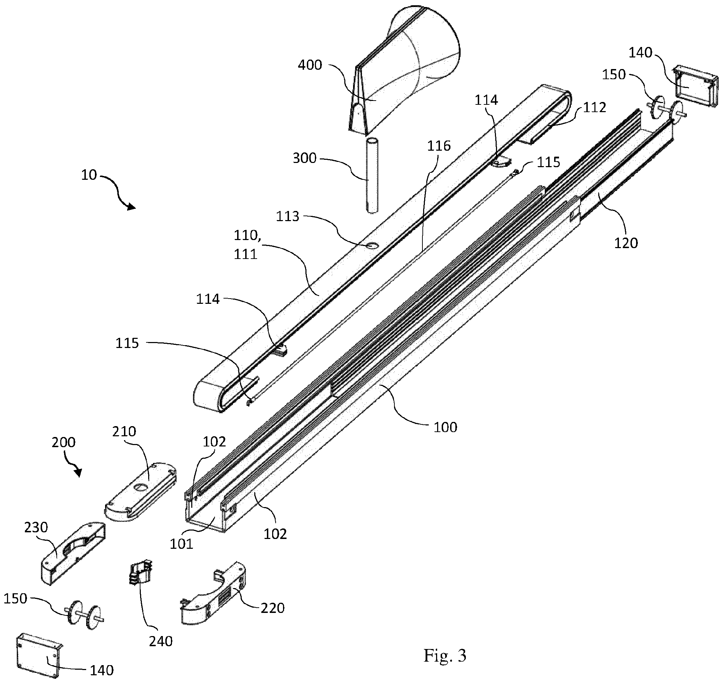

Inside the mounting rail 100 a gear tray 200 is arranged, which is displayed in detail in Figures 2A and 2B, as well as in the exploded view of the conductor rail system 10 shown in Figure 3. Also not shown in Figure 1 but in Figures 3, 4 and 5 is the electroconductor profile 120 which is held by the mounting rail 100, whereby the electroconductor profile 120 comprises wires 122 for an electric power supply and/or for transmission of control and/or data signals. As shown in Figure 3 the electroconductor profile 120 is preferably arranged on the inside of the mounting rail 100.

The gear tray 200 is moveable along the longitudinal direction L of the electroconductor profile 120 and thus the mounting rail 100. In the Figures 2A and 2B the gear tray 200 is shown in detail, whereby Figure 2A illustrates the assembled gear tray 200, while Figure 2B presents an exploded view of the gear tray 200, with its casing 210, 220, 230, which consists of three casing elements 210, 220, 230, and one handle 240 which is placed inside of the three casing elements 210, 220, 230. The handle 240 is hereby connected to a connecting element 300 - whereby in the presented figures the connecting element 300 is a connecting bolt 300 - preferably connected by means of a snap-in and twist-proof snap-in mounting 242. In the shown embodiment the handle 240 comprises electrical taps 241, which are used for contacting the wires 122 of the electroconductor profile 120. The gear tray 200 is formed to couple electrically and preferably mechanically with the electroconductor profile 120 of the mounting rail 100 by these electrical taps 241 in an operating state, wherein in an assembly state the electrical taps 241 are disposed inside the casing 210, 220, 230 of the gear tray 200. The three casing elements 210, 220, 230 are put together by fastening means as for example integral built fastening means, such as snap in elements, or screws, glue or others.

The two side cover parts 220, 230 together form a nipple 222, 232 at their bottom surface, which serves to hold the handle 240 centrally in position. Moreover, the two side cover parts 220, 230 each comprise channels 221, 231 which allow the electrical taps 241 to be moved out of the gear tray 200, preferably by a rotational movement of the handle 241, to contact the electroconductor profile 120 in the operating state. In the displayed embodiment, the side cover parts 220, 230 each have three channels 221, 231, whereby this number can be increased or decreased dependent on the number of electrical taps 241 of the handle 240, and the respective number of wires 122 of the electroconductor profile 120.

The top cover 210 of the gear tray 200 has a hole 211 for receiving the connecting element 300, such that the connecting element 300 is connected to the handle 241 inside the gear tray 200, whereby preferably the connecting element 300 is a connecting bolt 300. However other forms of implementation of the connecting element 300 are also possible.

The connecting bolt 300 then connects the gear tray 200 with the electrical device 400, such that the electrical device 400 is movable along the longitudinal axis L of the mounting rail 100 together with the gear tray 200, whereby the electrical device 400 is movable rotationally around the connecting bolt 300, in particular rotational around the z-axis as shown in Figure 1. The handle 240 of the gear tray 200 is hereby configured such that the electrical taps 241 extend out of the housing 210, 220, 230 to an operating state upon rotation of the connecting bolt 300, wherein in the operating state the electrical taps 241 are electrically contacted and mechanically coupled with the electroconductor profile 120.

As shown in Figure 1 the cover 110 is connected with the connecting bolt 300 and is further configured to move along with a movement of the electrical device 400, whereby the cover 110 covers at least a determined part of the mounting rail 100 in any position of the gear tray 200 and thus of the electrical device 400. In the embodiment of Figure 1 the cover 110 covers the whole mounting rail 100, whereby at the end faces of the mounting rail 100 end caps 140 are placed, which comprise sealing elements 160 to further seal the mounting rail 100. Hereby, the sealing elements 160 are arranged to abut against the cover 110 sealing the mounting rail 100 at the end faces towards the cover 110. Preferably the cover 110 and/or the end caps 140 and/or the sealing elements 160 provide a dust, humidity and/or moisture protection of the inside of the mounting rail 100, especially according to an IP protection class, in particular according to IP 54 or higher.

In a further embodiment the gear tray 200 comprises a power supply unit for the electrical device 400, as well as other components such as preferably communication devices for control commands or data, whereby the gear tray 200 is electronically connected to the electrical device 400. Therefore, the type of electrical device 400 can be flexibly and individually adapted to corresponding situations or needs of the user, so that different functions can be fulfilled by the electrical device 400. In particular, it is possible that the electrical device 400 is a luminaire 400, a spotlight, loudspeakers, sensors, a camera, a display or other devices. In the embodiments shown in the figures the electrical device 400 is displayed as a luminaire 400.

Figure 3 shows an exploded view of the embodiment of a conductor rail system known from Figure 1, whereby the components former covered by the cover 110 are displayed. In particular the electroconductor profile 120 is shown, whereby in this embodiment the electroconductor profile 120 is provided with grooves 121 which can be accessed from a contact side and which run in a longitudinal manner parallel to the longitudinal axis L along the mounting rail 100, said grooves 121 having the wires 122 for an electric power supply and/or for transmission of control and/or data signals. The gear tray 200 is positioned in between the two side walls of the electroconductor profile 120 and thus between the two side walls 102 of the mounting rail 100, whereby the electrical taps 141 are designed to contact the wires 122 in an operating state.

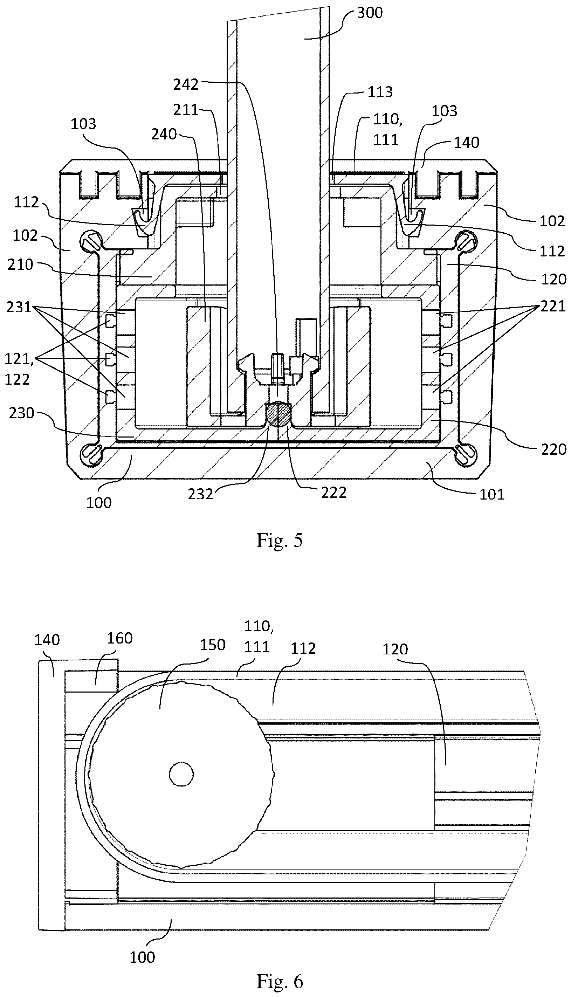

Moreover, in Figure 3 an embodiment of the cover 110 is shown, whereby the cover 110 is of a bendable and/or translucent material and has a cover hole 113 for receiving the connecting bolt 300 forming the connection between the cover 110 and the connecting bolt 300. The cover 110 comprises a flat cover surface 111 and lateral sealing lips 112, wherein in a cross-section perpendicular to the longitudinal direction L of the mounting rail 100 the sealing lips 112 protrude from the plane of the cover surface 111, and in particular are perpendicular to the cover surface 111 in an approximation, as shown in Figure 5. Hereby the sealing lips 112 engage in a sealing manner in corresponding notches 103 of the side walls 102, whereby the cover surface 111 contacts the side walls 102. In the end portions and end face areas of the mounting rail 100 the cover 110 is bent whereby preferably the sealing element 160 sealingly contacts the cover 110.

The cover 110 has end pieces 114 at its ends, whereby these end pieces 114 are connected by end piece connection elements 115, 116, such that the cover 110, the end pieces 114 and the end piece connection element 115, 116 form a loop. Preferably the end piece connection element 115, 116 is formed by a wire 116 or a string 116, and a hook 115 or other means of connection.

In the displayed embodiment of Figure 3 the end pieces 114 are interconnected via a wire 116 with a hook 115 at each of its respective ends. Parts of the cover 110 which are not used to cover the mounting rail 100 are arranged inside of the mounting rail 100 and are thus covered by the parts of the cover 110 that are used for covering the mounting rail 100. When the cover 110 is moved sections of the parts of the cover 110 which former were not used to cover the mounting rail 100 are then used for covering, whereby likewise parts of the cover 110 which were former used to cover the mounting rail 110 are then not used anymore. Hereby the guide element 150, which is positioned in each of the two end face areas of the mounting rail 100, supports the movement of the cover 110, especially in bending the cover 110. The end pieces 114 are preferably always parts of the cover 110 which are not used to cover the mounting rail 100, so that the cover 110 ideally is long enough for allowing any movement of the connecting bolt 300 along the longitudinal direction L of the mounting rail 100. Preferably the end pieces 114 contain a stop element which prevents the cover 110 to be moved beyond a point, where the end pieces 114 would surpass the guide element 150 and thus becoming a part of the cover which would be used for covering the mounting rail 100.

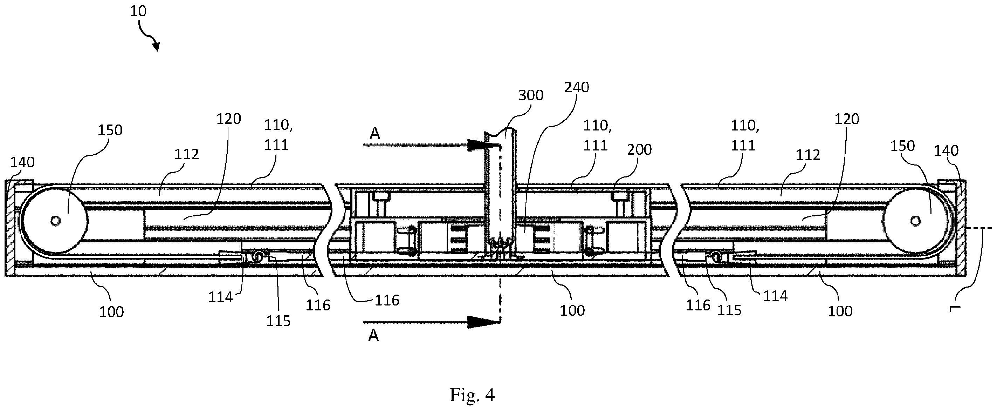

Figure 4 shows a cross-sectional view along the longitudinal axis L of an embodiment of a conductor rail system 10 with its internal components. The middle section of Figure 4 shows a gear tray 200 which is held inside the mounting rail 100, while being electrically connected to the electroconductor profile 120 via the electrical taps 241 and the wires 122 positioned in the grooves 121 of the electroconductor profile 120. Hereby the gear tray 200 is moveable along the longitudinal direction L respectively along the longitudinal axis L of the conductor rail system 10, while being also mechanically connected to the mounting rail 100 via the electroconductor profile 120. The Figure 4 also shows the coupling between the gear tray 200 and the connecting bolt 300 whereby the connecting bolt 300 is twist-proof connected to the handle 240 of the gear tray 200, such that a rotational movement of the connecting bolt 300 results in a corresponding rotational movement of the handle 240. The electrical device 400, which is not shown in Figure 4, is movable rotationally around the connecting bolt 300, such that the connecting bolt 300 is not rotated when changing direction of the electrical device 400. Therefore, the electrical device 400 which is connected to the gear tray 200 is movable along the longitudinal axis L of the conductor rail system 10 and is further movable rotationally around the connecting bolt 300 providing a flexible and individually changeable positioning of the electrical device 400.

The cover 110 is designed to always cover at least a determined part of the mounting rail 100, whereby in the shown embodiment the cover 110 covers the whole mounting rail 100, irrespective of the positioning of the gear tray 200 connected to the cover 110 via the connecting bolt 300. The connection of the gear tray 200, the electrical device 400 and the connecting bolt 300 to the cover 110 is hereby formed via the cover hole 113, which holds the connecting bolt 300. Other forms of connection between these components are also possible.

The two lateral image sections show the end portions of a conductor rail system 10, hereby these end portions are not necessarily of one and the same mounting rail 100, but can also be different mounting rails 100 in another embodiment where the conductor rail system 10 consists of multiple mounting rails 100.

In the embodiment shown in Figure 4 the two end portions of the conductor rail system 10 are provided with end caps 140 closing, preferably in a sealed manner, the mounting rail 100 at the respective end face, whereby a sealing element 160 may be attached to at least one end cap 140 pressing against the cover 110, in particular against the flat cover surface 111, sealing the conductor rail system 10.

Moreover, in the shown embodiment each end portion of the conductor rail system 10 has a guide element 150, which guides the cover 110 when moved, facilitating the movement and the bending of the cover 110, while simultaneous ensuring that the sealing lips 112 of the cover 110 are correctly arranged inside the respective notches 103 of the side walls 102. The guide element 150 is hereby connected with the side walls 102 of the mounting rail 100, such that it is freely rotatable around its own axis.

The shown cover 110 is preferably formed by extrusion, and is further preferred bendable and translucent. Most preferred the cover 110 is made of plastic. To ensure an easy and flexible positioning of the electrical device 400, respectively of the gear tray 200 while still covering the mounting rail 100, the ends of the cover 110 are connected to each other, forming a loop. Hereby it is possible, that the ends of the cover 110 are simply glued together, whereby other forms of connection are also thinkable. Hereby in the shown embodiment the cover 110 has end pieces 114 at its ends, whereby these end pieces 114 are connected to each other by an end piece connection element 115, 116, such that the cover 110, the end pieces 114 and the end piece connection element 115, 116 form a loop. Preferably the end piece connection element 115, 116 is formed by a wire 116 or string 116 and a hook 115 or other means of connection, as this facilitates the assembly of the conductor rail system 10, while ensuring a tight connection of the cover ends. Preferably the end pieces 114 are connected to the cover 110 via a snap-on mechanism. The end pieces 114 and end piece connection elements 115, 116 together with the guide elements 150 put the cover 110 under tension, which additionally supports the sealing of the mounting rail 100.

In an other embodiment of the conductor rail system 10 shown in Figure 4 it is also possible that the gear tray 200 with its connected connecting bolt 300 are not the only gear tray 200 and connecting bolt 300 in the conductor rail system 10, such that multiple electrical devices 400 are connected to the conductor rail system 10 via multiple gear trays 200 and connecting bolts 300. Hereby these multiple electrical devices 400 and thus the respective gear trays 200 are arranged in series along the longitudinal axis L of the mounting rail 100, whereby each of the electrical devices 400 is coupled by its respective connecting bolt 300 to its respective gear tray 200 and to the cover 110 of the conductor rail system 10.

Moreover in a further embodiment it is possible, that the conductor rail system 10 comprises multiple covers 110, whereby preferably in between two respective covers 110 some sort of an additional sealing element is placed, further ensuring that the inside of the conductor rail system 10 is sealed and protected against dust, humidity, moisture and/or unwanted contact.

Furthermore in another embodiment the conductor rail system 10 consists of multiple mounting rails 100. Hereby, it is possible that one cover 110 covers the multiple mounting rails 100, or at least a determined part of these mounting rails 110. In an embodiment with multiple mounting rails 100 and multiple covers 110 in the areas of connection of two mounting rails 100 the two respective covers 110 and the mounting rail 100 are preferably sealed by at least one sealing element 160.

In Figure 5 a cross-sectional view of an embodiment of a conductor rail system 10 along the sectional axis A-A indicated in Figure 4, which is perpendicular to the longitudinal axis L of the conductor rail system 10, is shown. The cross-section goes through a gear tray 200 such that the accommodation of the gear tray 200 inside the mounting rail 100 is presented. The electroconductor profile 120 is connected via a snap-in connection to the mounting rail 100, whereby both the mounting rail 100 and the electroconductor profile 120 have respective snap-in elements. The electroconductor profile 120 is further provided with grooves 121 on both of its side walls, whereby in these grooves wires 122 are positioned. Hereby it is possible that not every groove 121 is used to hold a wire 122. The side walls 102 of the mounting rail 100 are provided with notches 103 in an upper region of the side walls 102, for a sealing connection between the mounting rail 100 and the cover 110, whereby the sealing lips 112 of the cover 110 interact with the notches 103. The sealing lips 112 are hereby shaped like a hook, pressing against the walls of the notches 103, and further forming different contact areas with the walls of the notch 103 for an effective sealing. Preferably the shape of the sealing lips 112 enables a spring loaded snapping into the respective notch 103. Furthermore, the cover surface 111 is in contact with the side walls 102 of the mounting rail 100, forming an other sealing connection, such that the cover 110 provides a maze-like connection further improving the sealing. In an approximation in a cross-sectional view perpendicular to the longitudinal axis L the cover 110 has a π-shape.

Through the channels 221, 231 of the gear tray 200 the electrical taps 241 can connect to the wires 122 of the electroconductor profile 120, while providing a mechanical and electrical connection thereto, enabling the gear tray 200 to move along the longitudinal axis L of the electroconductor profile 120 in a rail-like manner. The two side cover parts 220, 230 together form the nipple 222, 232 at their bottom surface, which holds the handle 240 centrally in position, such that the connecting bolt 300 being inserted in the gear tray 200 from above through a hole 211 in the top cover 210, whereby the connecting bolt 300 is connected via a latching connection 242 with the handle 240, such that the handle 240 and the connecting bolt 300 are preferably connected by means of a snap-in and twist-proof snap-in mounting 242.

Figure 6 shows a zoomed view of an end region of an embodiment of a conductor rail system 10 with its components, whereby the interaction between the mounting rail 100, the end caps 140, the sealing element 160, the cover 110 and guide element 150 is illustrated. Hereby the guide element 150 supports the movement of the cover 110, as the cover 110 is bent around the guide element 150. In Figure 6 the guide element 150 is formed by a wheel element, whereby an embodiment with a cam element as the guide element 150 is also possible. Of course, other shapes of the guide element are also imaginable. The guide element 150 facilitates the movement of the cover 110, whereby furthermore the correct positioning of the sealing lips 112 is supported by the guide element 150. The sealing element 160 protects the inside of the mounting rail 100 in the area of the end caps 140.

In a further embodiment the conductor rail system has a second luminaire, whereby the cover 110 functions as a light emitting surface of the second luminaire. Hereby this second luminaire preferably comprises light sources, such as LEDs, which are preferably arranged at the gear tray 200 and/or at the end caps 140 of the mounting rail 100 for light coupling into the cover 110. In this embodiment the cover 110 preferably is configured to guide the light and to extract the light in a determined area of the cover 110. Moreover the light sources of the second luminaire could be positioned on the bottom wall 101 of the mounting rail 100.

With such an embodiment the conductor rail system 10 has some sort of background lighting, improving the usability and aesthetics of the conductor rail system 10. With the cover 110 being a light emitting surface on itself, preferably the whole length of the mounting rail 100 is effectively used as a luminaire. Further preferably, the cover has light influencing elements to improve the light output via the cover and to adapt it to individual situations. Such a conductor rail system 10 suits for multiple applications at once, as the electrical device 400 is still individually and flexibly selectable while providing the additional function of a lamp with the second luminaire. In particular the second luminaire could function as an emergency lightning or a daylight illumination.

The conductor rail system 10 provided herein has a movable cover 110 for a more flexible positioning of an electrical device 400 connected to the conductor rail system 10, while simultaneously allowing for individual and easy adjustments of the connected electrical devices 400. With the moveable and flexible cover 110 the inside of the mounting rail 100 is protected, and the aesthetics of the conductor rail system 10 are further improved.

## Claims

1. Conductor rail system (10) for connecting an electrical device (400), especially a luminaire (400), whereby the conductor rail system (10) comprises:
• at least one longitudinal mounting rail (100) with a longitudinal axis (L), with two side walls (102) and a bottom wall (101),
whereby preferably the mounting rail (100) has a U-shape in a cross-section perpendicular to the longitudinal axis (L);
• an electroconductor profile (120) held by said mounting rail (100),
whereby the electroconductor profile (120) comprises wires (122) for an electric power supply and/or for transmission of control and/or data signals,
and whereby the electroconductor profile (120) is preferably arranged on the inside of the mounting rail (100);
• a gear tray (200), whereby the gear tray (200) is moveable along the longitudinal direction (L) of the electroconductor profile (120) and thus the mounting rail (100);
• a connecting element (300) connecting the gear tray (200) and the electrical device (400);
• an elongated and flexible cover (110), which is held between the two side walls (102) of the mounting rail (100),
whereby the cover (110) is mounted movably along the longitudinal direction (L) of the mounting rail (100),
and whereby the cover (110) is connected with the connecting element (300) and is further configured to move along with a movement of the electrical device (400),
and whereby the cover (110) covers at least a determined part of the mounting rail (100) in any position of the gear tray (200) and thus of the electrical device (400),
**characterized in that,**
the cover (110) has end pieces (114) at its ends,
whereby these end pieces (114) are connected by an end piece connection element (115, 116), such that the cover (110), the end pieces (114) and the end piece connection element (115, 116) form a loop,
whereby the mounting rail (100) comprises a guide element (150) in each of its two end face areas,
whereby the guide element (150) supports the movement of the cover (110),
and whereby the cover (110) is at least partially bent around the guide element (150).

2. Conductor rail system according to claim 1,
**characterized in that**
the cover (110) has a cover hole (113) for receiving the connecting element (300) forming the connection between the cover (110) and the connecting element (300), whereby preferably the connecting element (300) is a connecting bolt (300).

3. Conductor rail system according to claim 1 or 2,
**characterized in that**
the electroconductor profile (120) is provided with grooves (121) which can be accessed from a contact side and which run in a longitudinal manner along the mounting rail (100), said grooves (121) having the wires (122) for an electric power supply and/or for transmission of control and/or data signals.

4. Conductor rail system according to any one of the forgoing claims,
**characterized in that**
the gear tray (200) is formed to couple electrically and preferably mechanically with the electroconductor profile (120) of the mounting rail (100) by electrical taps (241).

5. Conductor rail system according to any one of the forgoing claims,
**characterized in that**
the cover (110) comprises a flat cover surface (111) and lateral sealing lips (112), wherein in a cross-section perpendicular to the longitudinal direction (L) of the mounting rail (100) the sealing lips (112) protrude from the plane of the cover surface (111), and in particular are perpendicular to the cover surface (111) in an approximation,
whereby the sealing lips (112) engage in a sealing manner in corresponding notches (103) of the side walls (102), and whereby preferably the cover surface (111) contacts the side walls (102),
and whereby preferably the cover (110) is of a bendable and/or translucent material.

6. Conductor rail system according to any one of the forgoing claims,
**characterized in that**
the end piece connection element (115, 116) is formed by a wire (116) or string (116) and a hook (115) or other means of connection.

7. Conductor rail system according to any one of the forgoing claims,
**characterized in that**
the guide element (150) is formed by a wheel element or a cam element.

8. Conductor rail system according to any one of the forgoing claims,
**characterized in that**
the mounting rail (100) comprises end caps (140), which are arranged at the two end faces of the mounting rail (100),
and wherein the end caps (140) preferably comprise at least one sealing element (160) which is arranged to abut against the cover (110) sealing the mounting rail (100) at the end faces towards the cover (110).

9. Conductor rail system according to any one of the forgoing claims,
**characterized in that**
parts of the cover (110) which are not used to cover the mounting rail (100) are arranged inside of the mounting rail (100) and are thus covered by the parts of the cover (110) that are used for covering the mounting rail (100).

10. Conductor rail system according to any one of the forgoing claims,
**characterized in that**
the cover (110) provides a dust, humidity and/or moisture protection of the inside of the mounting rail (100), especially according to an IP protection class, in particular according to IP 54 or higher.

11. Conductor rail system according to any one of the forgoing claims,
**characterized in that**
the gear tray (200) has a casing (210, 220, 230), which consists of three casing elements (210, 220, 230), and one handle (240) which is placed inside of the three casing elements (210, 220, 230),
wherein the handle (240) is connected to the connecting element (300), preferably connected by means of a snap-in and twist-proof snap-in mounting (242),
and whereby preferably the handle (240) comprises the electrical taps (241),
wherein in an assembly state the electrical taps (241) are disposed inside the casing (210, 220, 230) of the gear tray (200),
and wherein the handle (240) is configured such that the electrical taps (241) extend out of the housing (210, 220, 230) to an operating state upon rotation of the connecting element (300), wherein in the operating state the electrical taps (241) are electrically contacted and mechanically coupled with the electroconductor profile (120),
and whereby preferably the electrical device (400) is movable rotationally around the connecting element (300), and moveable in a longitudinal direction (L) along the mounting rail (100) by the mechanical connection of the electrical device (400), the connecting element (300) and the gear tray (200).

12. Conductor rail system according to any one of the forgoing claims,
**characterized in that**
the conductor rail system (10) has a second luminaire, whereby the cover (110) functions as a light emitting surface of the second luminaire,
whereby preferably the second luminaire comprises light sources, such as LEDs, which are arranged at the gear tray (200) or at end caps (140) of the mounting rail (100).

13. Conductor rail system according to any one of the forgoing claims,
**characterized in that**
the gear tray (200) comprises a power supply unit for the electrical device (400), as well as other components such as preferably communication devices for control commands or data, whereby the gear tray (200) is electronically connected to the electrical device (400).

14. Conductor rail system according to any one of the forgoing claims,
**characterized in that**
the conductor rail system (10) comprises multiple gear trays (200) and thereto connected connecting element (300) for connection with an electrical device (400), whereby the gear trays (200) are arranged in series along the longitudinal axis (L) of the mounting rail (100), and whereby each of the gear trays (200) and connecting element (300) is connected to the cover (110) of the conductor rail system (10).

15. Conductor rail system according to any one of the forgoing claims,
**characterized in that**
the conductor rail system (10) consists of multiple mounting rails (100), whereby in the areas of connection of two mounting rails (100) the two respective covers (110) and the mounting rail (100) are sealed by at least one sealing element (160).

## Patentansprüche

1. Stromschienensystem (10) zum Verbinden einer elektrischen Vorrichtung (400), insbesondere einer Leuchte (400), wobei das Stromschienensystem (10) umfasst:
• mindestens eine Längstragschiene (100) mit einer Längsachse (L), mit zwei Seitenwänden (102) und einer Bodenwand (101),
wobei vorzugsweise die Tragschiene (100) in einem Querschnitt senkrecht zu der Längsachse (L) eine U-Form aufweist;
• ein Stromleiterprofil (120), das durch die Tragschiene (100) gehalten wird,
wobei das Stromleiterprofil (120) Leitungen (122) für eine Versorgung von elektrischem Strom und/oder für eine Übertragung von Steuer- und/oder Datensignalen umfasst,
und wobei das Stromleiterprofil (120) vorzugsweise auf dem Inneren der Tragschiene (100) angeordnet ist;
• einen Geräteträger (200), wobei der Geräteträger (200) entlang der Längsrichtung (L) des Stromleiterprofils (120) und somit der Tragschiene (100) bewegbar ist;
• ein Verbindungselement (300), das den Geräteträger (200) und die elektrische Vorrichtung (400) verbindet;
• eine längliche und flexible Abdeckung (110), die zwischen den zwei Seitenwänden (102) der Tragschiene (100) gehalten wird,
wobei die Abdeckung (110) entlang der Längsrichtung (L) der Tragschiene (100) bewegbar gelagert ist,
und wobei die Abdeckung (110) mit dem Verbindungselement (300) verbunden ist und ferner konfiguriert ist, um sich mit einer Bewegung der elektrischen Vorrichtung (400) mitzubewegen,
und wobei die Abdeckung (110) in einer beliebigen Position des Geräteträgers (200) und somit der elektrischen Vorrichtung (400) mindestens einen bestimmten Teil der Tragschiene (100) abdeckt,
**dadurch gekennzeichnet, dass,**
die Abdeckung (110) an ihren Enden Endstücke (114) aufweist,
wobei diese Endstücke (114) durch ein Endstückverbindungselement (115, 116) derart verbunden sind, dass die Abdeckung (110), die Endstücke (114) und das Endstückverbindungselement (115, 116) eine Schleife ausbilden,
wobei die Tragschiene (100) in jedem ihrer zwei Endflächenbereichen ein Führungselement (150) umfasst,
wobei das Führungselement (150) die Bewegung der Abdeckung (110) unterstützt,
und wobei die Abdeckung (110) mindestens teilweise um das Führungselement (150) herum gebogen ist.

2. Stromschienensystem nach Anspruch 1,
**dadurch gekennzeichnet, dass**
die Abdeckung (110) eine Abdeckungsaussparung (113) zum Aufnehmen des Verbindungselements (300) aufweist, das die Verbindung zwischen der Abdeckung (110) und dem Verbindungselement (300) ausbildet, wobei vorzugsweise das Verbindungselement (300) ein Verbindungsbolzen (300) ist.

3. Stromschienensystem nach Anspruch 1 oder 2,
**dadurch gekennzeichnet, dass**
das Stromleiterprofil (120) mit Nuten (121) versehen ist, die von einer Kontaktseite aus zugänglich sind und die auf eine Längsweise entlang der Tragschiene (100) verlaufen, wobei die Nuten (121) Leitungen (122) für eine Versorgung von elektrischem Strom und/oder für die Übertragung von Steuer- und/oder Datensignalen aufweist.

4. Stromschienensystem nach einem der vorstehenden Ansprüche,
**dadurch gekennzeichnet, dass**
der Geräteträger (200) ausgebildet ist, um durch elektrische Taps (241) mit dem Stromleiterprofil (120) der Tragschiene (100) elektrisch und vorzugsweise mechanisch zu koppeln.

5. Stromschienensystem nach einem der vorstehenden Ansprüche,
**dadurch gekennzeichnet, dass**
die Abdeckung (110) eine flache Abdeckoberfläche (111) und laterale Dichtungslippen (112) umfasst, wobei die Dichtungslippen (112) in einem Querschnitt senkrecht zu der Längsrichtung (L) der Tragschiene (100) aus der Ebene der Abdeckungsoberfläche (111) hervorstehen, und insbesondere in einer Näherung senkrecht zu der Abdeckungsoberfläche (111) stehen,
wobei die Dichtungslippen (112) in entsprechende Einkerbungen (103) der Seitenwände (102) auf eine dichtende Weise eingreifen, und wobei vorzugsweise die Abdeckungsoberfläche (111) die Seitenwände (102) kontaktiert,
und wobei vorzugsweise die Abdeckung (110) aus einem biegsamen und/oder durchscheinenden Material besteht.

6. Stromschienensystem nach einem der vorstehenden Ansprüche,
**dadurch gekennzeichnet, dass**
das Endstückverbindungselement (115, 116) durch eine Leitung (116) oder eine Schnur (116) und einen Haken (115) oder ein anderes Verbindungsmittel ausgebildet ist.

7. Stromschienensystem nach einem der vorstehenden Ansprüche,
**dadurch gekennzeichnet, dass**
das Führungselement (150) durch ein Radelement oder ein Nockenelement ausgebildet ist.

8. Stromschienensystem nach einem der vorstehenden Ansprüche,
**dadurch gekennzeichnet, dass**
die Tragschiene (100) Endkappen (140) umfasst, die an den zwei Endflächen der Tragschiene (100) angeordnet sind,
und wobei die Endkappen (140) vorzugsweise mindestens ein Dichtungselement (160) umfassen, das angeordnet ist, um an der Abdeckung (110) anzuliegen, das die Tragschiene (100) an den Endflächen zu der Abdeckung (110) hin abdichtet.

9. Stromschienensystem nach einem der vorstehenden Ansprüche,
**dadurch gekennzeichnet, dass**
Teile der Abdeckung (110), die nicht verwendet werden, um die Tragschiene (100) abzudecken, im Inneren der Tragschiene (100) angeordnet sind und somit durch die Teile der Abdeckung (110) abgedeckt sind, die zum Abdecken der Tragschiene (100) verwendet werden.

10. Stromschienensystem nach einem der vorstehenden Ansprüche,
**dadurch gekennzeichnet, dass**
die Abdeckung (110) einen Staub-, Feuchtigkeits- und/oder Nässeschutz des Inneren der Tragschiene (100), speziell entsprechend einer IP-Schutzklasse, insbesondere gemäß IP 54 oder höher.

11. Stromschienensystem nach einem der vorstehenden Ansprüche,
**dadurch gekennzeichnet, dass**
der Geräteträger (200) ein Gehäuse (210, 220, 230), das aus drei Gehäuseelementen (210, 220, 230) besteht, und einen Griff (240) aufweist, der im Inneren der drei Gehäuseelemente (210, 220, 230) platziert ist,
wobei der Griff (240) mit dem Verbindungselement (300), vorzugsweise mittels einer einrastbaren und verdrehsicheren Schnappbefestigung (242), verbunden ist,
und wobei vorzugsweise der Griff (240) die elektrischen Taps (241) umfasst,
wobei die elektrischen Taps (241) in einem Montagezustand im Inneren des Gehäuses (210, 220, 230) des Geräteträgers (200) eingerichtet sind,
und wobei der Griff (240) derart konfiguriert ist, dass sich die elektrischen Taps (241) bei einer Rotation des Verbindungselements (300) aus dem Gehäuse (210, 220, 230) heraus in einen Betriebszustand erstrecken, wobei in dem Betriebszustand die elektrischen Taps (241) elektrisch kontaktiert und mechanisch mit dem Stromleiterprofil (120) gekoppelt sind,
und wobei vorzugsweise die elektrische Vorrichtung (400) um das Verbindungselement (300) herum rotatorisch bewegbar ist und durch die mechanische Verbindung der elektrischen Vorrichtung (400), des Verbindungselements (300) und des Geräteträgers (200) in einer Längsrichtung (L) entlang der Tragschiene (100) bewegbar ist.

12. Stromschienensystem nach einem der vorstehenden Ansprüche,
**dadurch gekennzeichnet, dass**
das Stromschienensystem (10) eine zweite Leuchte aufweist, wobei die Abdeckung (110) als eine lichtemittierende Oberfläche der zweiten Leuchte fungiert,
wobei vorzugsweise die zweite Leuchte Lichtquellen, wie LEDs, umfasst, die an dem Geräteträger (200) oder an Endkappen (140) der Tragschiene (100) angeordnet sind.

13. Stromschienensystem nach einem der vorstehenden Ansprüche,
**dadurch gekennzeichnet, dass**
der Geräteträger (200) eine Stromversorgungseinheit für die elektrische Vorrichtung (400), sowie andere Komponenten wie vorzugsweise Kommunikationsvorrichtungen für Steuerbefehle oder Daten umfasst, wobei der Geräteträger (200) mit der elektrischen Vorrichtung (400) elektronisch verbunden ist.

14. Stromschienensystem nach einem der vorstehenden Ansprüche,
**dadurch gekennzeichnet, dass**
das Stromschienensystem (10) mehrere Geräteträger (200) und damit verbundene Verbindungselemente (300) für die Verbindung mit einer elektrischen Vorrichtung (400) umfasst, wobei die Geräteträger (200) in Reihe entlang der Längsachse (L) der Tragschiene (100) angeordnet sind, und wobei jeder der Geräteträger (200) und Verbindungselemente (300) mit der Abdeckung (110) des Stromschienensystems (10) mehrere Geräteträgersystems (10) verbunden ist.

15. Stromschienensystem nach einem der vorstehenden Ansprüche,
**dadurch gekennzeichnet, dass**
das Stromschienensystem (10) aus mehreren Tragschienen (100) besteht, wobei in dem Verbindungsbereichen der zwei Tragschienen (100) die zwei jeweiligen Abdeckungen (110) und die Tragschiene (100) durch mindestens ein Dichtungselement (160) abgedichtet sind.

## Revendications

1. Système de rail conducteur (10) permettant de connecter un appareil électrique (400), en particulier un luminaire (400), moyennant quoi le système de rail conducteur (10) comprend :
• au moins un rail de montage longitudinal (100) avec un axe longitudinal (L), comportant deux parois latérales (102) et une paroi inférieure (101),
moyennant quoi, de préférence, le rail de montage (100) présente une forme en U dans une section transversale perpendiculaire à l'axe longitudinal (L) ;
• un profilé électroconducteur (120) maintenu par ledit rail de montage (100),
moyennant quoi le profilé électroconducteur (120) comprend des fils (122) pour une alimentation électrique et/ou une transmission de signaux de commande et/ou de données,
et moyennant quoi le profilé électroconducteur (120) est de préférence agencé à l'intérieur du rail de montage (100) ;
• un plateau d'engrenage (200), moyennant quoi le plateau d'engrenage (200) est mobile le long de la direction longitudinale (L) du profilé électroconducteur (120) et donc du rail de montage (100) ;
• un élément de liaison (300) reliant le plateau d'engrenage (200) et le dispositif électrique (400) ;
• un couvercle allongé et flexible (110), qui est maintenu entre les deux parois latérales (102) du rail de montage (100),
moyennant quoi le couvercle (110) est monté de manière mobile le long de la direction longitudinale (L) du rail de montage (100),
et moyennant quoi le couvercle (110) est relié à l'élément de liaison (300) et est en outre conçu pour se déplacer en même temps que le dispositif électrique (400),
et moyennant quoi le couvercle (110) couvre au moins une partie déterminée du rail de montage (100) dans n'importe quelle position du plateau d'engrenage (200) et donc de l'appareil électrique (400),
**caractérisé en ce que,**
le couvercle (110) présente des pièces d'extrémité (114) au niveau de ses extrémités,
moyennant quoi ces pièces d'extrémité (114) sont reliées par un élément de liaison de pièce d'extrémité (115, 116), de telle sorte que le couvercle (110), les pièces d'extrémité (114) et l'élément de liaison de pièce d'extrémité (115, 116) forment une boucle,
moyennant quoi le rail de montage (100) comprend un élément de guidage (150) dans chacune de ses deux zones de face d'extrémité,
moyennant quoi l'élément de guidage (150) soutient le mouvement du couvercle (110),
et moyennant quoi le couvercle (110) est au moins partiellement plié autour de l'élément de guidage (150).

2. Système de rail conducteur selon la revendication 1,
**caractérisé en ce que**
le couvercle (110) présente un trou de couvercle (113) permettant de recevoir l'élément de liaison (300) formant la liaison entre le couvercle (110) et l'élément de liaison (300), moyennant quoi, de préférence, l'élément de liaison (300) est un boulon de fixation (300).

3. Système de rail conducteur selon la revendication 1 ou 2,
**caractérisé en ce que**
le profilé électroconducteur (120) est pourvu de rainures (121) accessibles depuis un côté de contact et s'étendant de manière longitudinale le long du rail de montage (100), lesdites rainures (121) présentant les fils (122) pour une alimentation électrique et/ou une transmission de signaux de commande et/ou de données.

4. Système de rail conducteur selon l'une quelconque des revendications précédentes,
**caractérisé en ce que**
le plateau d'engrenage (200) est formé pour se coupler électriquement et de préférence s'accoupler mécaniquement avec le profilé électroconducteur (120) du rail de montage (100) par des prises électriques (241).

5. Système de rail conducteur selon l'une quelconque des revendications précédentes,
**caractérisé en ce que**
le couvercle (110) comprend une surface de couvercle plate (111) et des lèvres d'étanchéité latérales (112), dans lequel, dans une section transversale perpendiculaire à la direction longitudinale (L) du rail de montage (100), les lèvres d'étanchéité (112) font saillie à partir du plan de la surface de couvercle (111), et en particulier sont perpendiculaires à la surface de couvercle (111) dans une certaine approximation,
moyennant quoi les lèvres d'étanchéité (112) entrent en prise de manière étanche avec des encoches correspondantes (103) des parois latérales (102), et moyennant quoi, de préférence, la surface de couvercle (111) est en contact avec les parois latérales (102),
et moyennant quoi, de préférence, le couvercle (110) est en matériau pliable et/ou translucide.

6. Système de rail conducteur selon l'une quelconque des revendications précédentes,
**caractérisé en ce que**
l'élément de liaison de pièce d'extrémité (115, 116) est formé d'un fil (116) ou d'une ficelle (116) et d'un crochet (115) ou d'un autre moyen de liaison.

7. Système de rail conducteur selon l'une quelconque des revendications précédentes,
**caractérisé en ce que**
l'élément de guidage (150) est formé d'un élément de roue ou d'un élément de came.

8. Système de rail conducteur selon l'une quelconque des revendications précédentes,
**caractérisé en ce que**
le rail de montage (100) comprend des capuchons d'extrémité (140), qui sont agencés au niveau des deux faces d'extrémité du rail de montage (100),
et dans lequel les capuchons d'extrémité (140) comprennent de préférence au moins un élément d'étanchéité (160) qui est conçu pour venir en butée contre le couvercle (110) scellant le rail de montage (100) au niveau des faces d'extrémité vers le couvercle (110).

9. Système de rail conducteur selon l'une quelconque des revendications précédentes,
**caractérisé en ce que**
des parties du couvercle (110) qui ne sont pas utilisées pour couvrir le rail de montage (100) sont agencées à l'intérieur du rail de montage (100) et sont donc couvertes par les parties du couvercle (110) qui sont utilisées pour couvrir le rail de montage (100).

10. Système de rail conducteur selon l'une quelconque des revendications précédentes,
**caractérisé en ce que**
le couvercle (110) assure une protection contre la poussière, l'humidité et/ou la mouillure de l'intérieur du rail de montage (100), notamment selon un indice de protection IP, en particulier selon l'indice IP 54 ou supérieur.

11. Système de rail conducteur selon l'une quelconque des revendications précédentes,
**caractérisé en ce que**
le plateau d'engrenage (200) présente un boîtier (210, 220, 230), constitué de trois éléments de boîtier (210, 220, 230), et une poignée (240) qui est placée à l'intérieur des trois éléments de boîtier (210, 220, 230),
dans lequel la poignée (240) est reliée à l'élément de liaison (300), de préférence reliée au moyen d'une fixation par encliquetage et d'un encliquetage résistant à la torsion (242),
et moyennant quoi, de préférence, la poignée (240) comprend les prises électriques (241),
dans lequel, à l'état d'assemblage, les prises électriques (241) sont disposées à l'intérieur du boîtier (210, 220, 230) du plateau d'engrenage (200),
et dans lequel la poignée (240) est conçue de telle sorte que les prises électriques (241) sortent du logement (210, 220, 230) pour atteindre un état de fonctionnement lors d'une rotation de l'élément de liaison (300), dans lequel, à l'état de fonctionnement, les prises électriques (241) sont en contact électrique et accouplées mécaniquement avec le profilé électroconducteur (120),
et, moyennant quoi, de préférence, le dispositif électrique (400) est mobile en rotation autour de l'élément de liaison (300) et mobile dans une direction longitudinale (L) le long du rail de montage (100) par la liaison mécanique du dispositif électrique (400), de l'élément de liaison (300) et du plateau d'engrenage (200).

12. Système de rail conducteur selon l'une quelconque des revendications précédentes,
**caractérisé en ce que**
le système de rail conducteur (10) présente un second luminaire, moyennant quoi le couvercle (110) fonctionne comme surface électroluminescente du second luminaire,
moyennant quoi, de préférence, le second luminaire comprend des sources lumineuses, telles que des DEL, qui sont agencées au niveau du plateau d'engrenage (200) ou au niveau des pièces d'extrémité (140) du rail de montage (100).

13. Système de rail conducteur selon l'une quelconque des revendications précédentes,
**caractérisé en ce que**
le plateau d'engrenage (200) comprend une unité d'alimentation pour le dispositif électrique (400), ainsi que d'autres composants tels que, de préférence, des dispositifs de communication pour des instructions ou des données de commande, moyennant quoi le plateau d'engrenage (200) est électroniquement connecté au dispositif électrique (400).

14. Système de rail conducteur selon l'une quelconque des revendications précédentes,
**caractérisé en ce que**
le système de rail conducteur (10) comprend plusieurs plateaux d'engrenage (200) et un élément de liaison (300) relié à ceux-ci pour une liaison avec un dispositif électrique (400), moyennant quoi les plateaux d'engrenage (200) sont agencés en série le long de l'axe longitudinal (L) du rail de montage (100), et moyennant quoi chacun des plateaux d'engrenage (200) et de l'élément de liaison (300) est relié au couvercle (110) du système de rail conducteur (10).

15. Système de rail conducteur selon l'une quelconque des revendications précédentes,
**caractérisé en ce que**
le système de rail conducteur (10) est constitué de plusieurs rails de montage (100), moyennant quoi dans les zones de liaison de deux rails de montage (100), les deux couvercles respectifs (110) et le rail de montage (100) sont scellés par au moins un élément d'étanchéité (160).
